# EUROPÄISCHE PATENTSCHRIFT

(11) **EP 0 755 992 B1**
(45) Veröffentlichungstag und Bekanntmachung des Hinweises auf die Patenterteilung: **12.01.2000**
(21) Anmeldenummer: 96109540.3
(22) Anmeldetag: 13.06.1996
(51) Int. Cl.: C09K 17/40, C09K 17/44, C04B 28/02

(54) **Injektionsmittel sowie unter Verwendung des Injektionsmittels hergestellte Injektionssuspensionen**
Injectable composition and suspensions prepared during the injection
Compositions injectable, et suspensions lors de l'injection

(30) Priorität: 25.07.1995 DE 19527135; 09.10.1995 DE 19537616
(43) Veröffentlichungstag der Anmeldung: 29.01.1997
(73) Patentinhaber: DYCKERHOFF AKTIENGESELLSCHAFT, D-65203 Wiesbaden (DE)
(72) Erfinder: Teichert, Horst-Dieter, 65366 Geisenheim (DE); Umlauf, Reinhard, Dr., 65203 Wiesbaden (DE)
(74) Vertreter: Patentanwälte Dr. Solf & Zapf

(56) Entgegenhaltungen:
- EP-A- 0 631 994
- CH-A- 360 662
- FR-A- 1 297 183
- GB-A- 1 105 623
- US-A- 2 655 004
- US-A- 4 464 200
- US-A- 5 013 349
- CHEMICAL ABSTRACTS, vol. 122, no. 8, 20.Februar 1995 Columbus, Ohio, US; abstract no. 87712, XP002015362 & AM.CONCR.INST., Bd. 148, 1994, Seiten 189-207, C.B.SKAGGS: "application of rheological modifiers and superplasticizers in cementitious systems"

## Beschreibung

Die Erfindung betrifft eine natriumbentonitfreie Injektionsmittelsuspension zur Abdichtung und/oder zur Verminderung der Durchlässigkeit von Böden (Lockergesteinen) und/oder Fels und/-oder Bauwerken gegen eine Durchdringung durch Fluide, insbesondere durch Wasser und/oder Gase. Die Erfindung ist insbesondere anwendbar zur Sohlabdichtung des sandigen Untergrunds einer Baugrube und zur Abdichtung von Rissen und Klüften im Fels.

Bei Tiefbauvorhaben in sandigem Untergrund ist das Eindringen von Grundwasser in die Baugrube zu vermeiden. Üblicherweise unterbricht man die Grundwasserzufuhr durch vertikale Umschließung der Baugrube mit einer Dicht- oder Schmalwand. Das Nachdringen des Grundwassers aus dem Untergrund unterbricht man durch Bodeninjektionen mit Injektionslösungen oder Injektionssuspensionen, wobei in einem bestimmten Raster injiziert wird.

Die Feststoffe der Injektionssuspensionen sollen Korngrößen aufweisen, die es ermöglichen, in feinste Hohlräume einzudringen. Außerdem muß die Injektionssuspension gewährleisten, daß nach einer sogenannten Reifungszeit die Wasserdurchlässigkeit des injizierten Bodenkörpers zumindest ausreichend weitgehend reduziert ist. Vom Injektionsgut darf keine Umweltgefährdung ausgehen. Das Injektionsverfahren muß technisch leicht handhabbar und wirtschaftlich ausführbar sein.

Bekannt ist, Injektionslösungen in Form sogenannter "Weichgele" oder Feinstzementsuspensionen zu verwenden.

Die Weichgele bestehen aus Lösungen von Wasserglas und einer Härterkomponente. Nachteilig ist, daß die Lösung nach Zugabe des Härters in einem sehr kurzen Zeitraum injiziert werden muß, da anderenfalls Reaktionen stattfinden, welche die Viskosität der Injektionssuspension derart erhöhen, daß die Injektion nicht durchführbar ist. Außerdem ist die Entsorgung von Resten der Suspension problematisch. Ein ganz wesentlicher Nachteil aber ist der unerwünschte hohe bleibende Eintrag von Alkalien in das Grundwasser. Es werden daher bereits Forderungen laut, derartige Weichgele als Injektionsgut auszuschließen.

Feinstzementsuspensionen bestehen aus wäßrigen Aufschlämmungen von Feinstzementen mit sehr hoher Feinheit, denen zur Stabilisierung meist Natriumbentonit zugegeben wird. Die Feinstzementsuspensionen sind einfach und ungefährlich zu verarbeiten. Feinstzemente bestehen meist aus feinst ausgemahlenen Hüttensanden und Anreger und/oder Portlandzementen, die nach der Zugabe von Wasser infolge ihrer Hydratation temporär unter Freisetzung von Ca(OH)₂ alkalisch reagieren. Das Ca(OH)₂ reagiert mit dem CO₂ des Grundwassers zu Kalk. Demgemäß ist das Injektionsverfahren mit Feinstzementsuspensionen umweltschonend.

Natriumbentonit ist ein stark quellfähiger Ton, der in wäßriger Suspension in feinste Teilchen zerfällt. Diese feinsten Natriumbentonit-Teilchen verleihen Suspensionen im Ruhestand eine Fließgrenze, die die festen Bestandteile am Sedimentieren hindert. In Gegenwart von hydratisierendem Zement neigen Natriumbentonite zur Ionenumladung mit der Folge einer unerwünschten Agglomeration; die hohe Feinheit der Ausgangskomponenten kann somit nicht voll ausgeschöpft werden. Außerdem ist die Lagerstabilität von Natriumbentonit-Feinstzement-Abmischungen sehr begrenzt.

Ein weiterer Nachteil von Natriumbentonit-stabilisierten Feinstzementsuspensionen ist, daß die erwünschten Wirkungen der Injektion in salzführenden Böden beeinträchtigt werden. Hinzu kommt, daß Natriumbentonit-Feinstzementsuspensionen mit hohen Wasser-Bindemittel-Werten zur Versickerung im Untergrund neigen, was in der Regel nur vermieden werden kann, wenn der Natriumbentonit-Anteil deutlich erhöht wird. Mit der Erhöhung des Natriumbentonit-Anteils steigt aber auch die Gefahr der Agglomeration.

Aus EP-A-0 631 994 ist eine bentonitfreie Injektionssuspension auf der Basis von Feinstbindemittel und Feinstfüllstoffen bekannt, wobei Hydroxyethylcellulose als Dispergiermittel eingesetzt wird. Diese Bindemittelsuspension soll ein Wasser-Bindemittel-Verhältnis von 0,67 bis 2,3 für Feinstbindemittel und 0,33 bis 5 für normale Zemente aufweisen. Als Feinstfüllstoffe können Glimmer, Talk, Kaolin, Calcit, Feldspat, Dolomit, Kieselsäure, Titan- oder Aluminiumoxid eingesetzt werden und als Polysaccharid wird Hydroxyethylcellulose verwendet, die als Verdikker wirkt.

US-A-2,655,004 offenbart eine fließfähige bentonitfreie Suspension und ein Verfahren zum Verstärken und Verfestigen poröser Erdmassen, Felsmauerwerke und Gebäudebeton. Gemäß dieser Druckschrift soll eine verbesserte aushärtbare zementhaltige Mischung geschaffen werden, welche unter Druck in die Hohlräume und Risse einer porösen oder Löcher aufweisenden Betonmasse eingepreßt werden kann. Die hier verwendete Injektionssuspension soll hydraulischen Zement normaler Körnung, Wasser und einen geringen Anteil Dispergiermittel aufweisen, wobei als Dispergiermittel Celluloseether verwendet wird, der als Verdicker wirkt.

Der Erfindung liegt die Aufgabe zugrunde, eine mindestens ein Bindemittel aufweisende Injektionsmittelsuspension zu schaffen, die einfach verarbeitbar ist und eine optimale Abdichtung bzw. Verminderung der Durchlässigkeit gewährleistet, wobei die Injektionsmittelsuspension eine erhöhte Stabilität gegen Sedimentation auch bei hohen Wasser-Feststoff-Werten aufweist.

Diese Aufgabe wird durch die natriumbentonitfreie Injektionsmittelsuspension gemäß Anspruch 1 gelöst.

Vorteilhafte Weiterbildungen der Erfindung sind in den Ansprüchen 2 bis 21 gekennzeichnet.

Die erfindungsgemäße Injektionssuspension ist natriumbentonitfrei und bindemittelarm. Sie enthält neben den wesentlichen Basiskomponenten Bindemittel, insbesondere Feinstbindemittel, Fließmittel, einen im wesentlichen inerten mineralischen, feinstteiligen, gerüstbildenden Füllstoff und mindestens ein mikrobielles Polysaccharid, das als Dichtmittel und als Stabilisierer wirkt. Vorzugsweise enthält die Injektionssuspension einen Beschleuniger. Inert im Sinne der Erfinung bedeutet, daß der Füllstoff nicht reagiert oder nur unwesentlich reagiert bzw. reaktionsträge ist. Er kann eine geringe latente Hydraulizität oder Puzzolanität aufweisen.

Die Feinheit der Feinstbindemittel ist bekannt. Die Polysaccharide werden z.B. beschrieben in Ullmanns Enzyklopädie der technischen Chemie, 4. neubearbeitete und erweiterte Auflage, Bd. 19, Seite 233 ff. Besonders geeignete Stabilisierer sind Biopolymere auf der Basis Xanthan- oder Welan-Gummi. Die Wirkung dieser Stoffe, insbesondere des Polymers auf der Basis von Welan-Gummi oder Welan-Gummi selbst, oder synthetische Polymerisat-Verdickungsmittel, wie z.B. auf Basis von Acrylsäure, kann durch Synergien mit Celluloseprodukten, wie z.B. HEC, CMHEC und CMC, oder anderen natürlichen Verdickern, wie z.B. Guar- und Johannisbrotkernmehl, verstärkt werden.

Aus der DE 43 39 386 Al sind Natriumbentonit-Flüssigkeitsmedien zur Bohrspülung und Verfüllung von seismischen Flachbohrungen bekannt, die neben Bentonit und Zement zusätzlich ausgewählte Polysaccharide enthalten. Durch das Polysaccharid soll das Sedimentationsverhalten und die Filterkuchenbildung verbessert werden. Zudem sind Injektionssuspensionen aus Zement und Wasser bekannt, die ein Polysaccharid in Kombination mit einem Superverflüssiger enthalten ("Applications of Rheological Modifiers and Superplasticizers in Cementitious Systems", C.B. Skaggs, W. G. Rakitsky, and S.F. Whitaker, Superplasticizers and Other Chemical Admixtures in Concrete, Proceedings of 4th CANMET/ACI International Conference, Montreal, Canada, Oktober 1994). In den bekannten Mischungen erfolgt im ersten Fall lediglich zielgerichtet der Aufbau eines abdichtenden Filterkuchens, im anderen Fall wird die Abdichtung lediglich durch das Bindemittel selbst beschreiben. Das Zusammenspiel der erfindungsgemäßen Komponenten wird damit nicht berücksichtigt. Dies gelingt nach der vorliegenden Erfindung nur durch die Verwendung von Bindemitteln, insbesondere von Feinstbindemitteln, in Verbindung mit Feinstfüllstoffen und Polysacchariden, wobei die Mischung natriumbentonitfrei sein muß.

Die Mischungen sind lagerstabil und die daraus hergestellten erfindungsgemaßen Injektionssuspensionen über lange Zeit sedimentationsstabil und auch in salzführenden Böden, ohne beeinträchtigt zu werden, einsetzbar. Die hohe Feinheit der Komponenten, insbesondere bei Verwendung von Feinstbindemitteln, kann voll ausgenutzt werden. Die Bildung von Agglomeraten durch chemische oder chemisch-physikalische Veränderung eines Bestandteils ist ausgeschlossen. Ein Filtratwasserverlust, gemessen nach dem API RP 13B-Test, ist gering; ein Filterkuchen bildet sich nicht. Überraschenderweise bleibt der Wasserdurchlässigkeitswert nach DIN 18130 einer injizierten Sandschicht bei Verwendung des Füllstoffs, dessen Anteil am Feststoffgehalt der Mischung vorzugsweise über 50 Gew.-% beträgt, drastisch abgesenkt.

Woraus die besondere Wirkung der Kombination des Stabilisierers mit dem Feststoffsystem resultiert, ist noch nicht bekannt. Die Feststoffe der mit Wasser/Feststoff-Werten von vorzugsweise über 5 angemachten Suspensionen sind theoretisch betrachtet nicht in der Lage, die relativ großen Zwischenräume in z.B. sandigen Böden bzw. in Rissen in klüftigem Fels auszufüllen. Sehr wahrscheinlich bildet die Kombination der Bestandteile Stabilisierer/Feinstfüllstoff und Bindemittel, insbesondere Feinstbindemittel, ein Gerüst oder Skelett in den Porenräumen des Sandes bzw. zwischen den Rißufern des Felses, das sich an den Korn-bzw. Rißwandungen abstützt und die Porenräume derart in kleinere Poren unterteilt, daß das Eindringen und Durchdringen von Wasser weitestgehend unterbunden werden kann. Der Stabilisierer hat u.a. die Aufgabe, die festen Komponenten (Füllstoff und Zement, insbesondere Feinstzement) in der Kluft bzw. in den Zwickeln zwischen den Sandkörnern festzuhalten, bis Kristalle bzw. Kristallite der Silikathydratphasen, die aus den Zementkörnern radial in den Raum wachsen, die Füllstoffkörner dauerhaft untereinander vernetzen und mit den Raumwandungen verbinden.

Als Feinstfüllstoff können tonhaltige Gesteinsmehle und Tonmehle eingesetzt werden, soweit sich die Tonkomponente gegenüber Calciumionen weitgehend inert verhält, wie z.B. bei calciumbentonitischen, kaolinitischen und illitschen Tonen. Im Gegensatz zu Natriumbentonit, der die Rolle eines Stabilisierers hat, tragen Calciumbentonit, Illit und Kaolinit bei hohen Wasser/Feststoff-Werten nicht oder nur unwesentlich zur Stützung einer Suspension bei. Sie tragen auch nicht wesentlich zur Festigkeitsentwicklung bei, weshalb sie als "inerte" Feinstfüllstoffe im Sinne der Erfindung verwendet werden.

Zu den Feinstfüllstoffen sind auch z.B. Flugaschen, und/oder bestimmte träge reagierende Hüttensandmehle und/oder bestimmte Gesteinsmehle, wie z.B. Traß- oder Bims zu rechnen, die zwar über einen längeren Zeitraum einen geringen Festigkeitsbeitrag liefern, der aber für die genannte kurzfristige Anwendung unbeachtlich ist.

Durch die erfindungsgemäße natriumbentonitfreie Injektionsmittelsuspension erfolgt eine Abdichtung der Poren verbunden mit einer, gegenüber anderen Stoffen, verbesserten Unweltverträglichkeit durch eine entscheidende Absenkung der freigesetzten Alkali- und Erdalkaliionen. Die Mischungen zur Herstellung einer natriumbentonitfreien Injektionssuspension bestehen im wesentlichen aus:
- Komponente A: Bindemittel, insbesondere Feinstbindemittel, vorzugsweise Feinstzement;
- Komponente B: Feinstfüllstoff, insbesondere Feinstgesteinsmehl;
- Komponente C: Stabilisierer in Form eines Polysaccharids;
- Komponente D: Fließmittel und vorzugsweise:
- Komponente E: Erhärtungsbeschleuniger.

Zudem können andere übliche Zusatzmittel vorhanden sein, wie Injektionshilfsmittel oder Wasserretentionsmittel.

Bevorzugte Mischungen enthalten die folgenden Bestandteile:
- Komponente A: 80 bis 20 Gew.-%, insbesondere 70 bis 30 Gew.-%, vorzugsweise 60 bis 40 Gew.%;
- Komponente B: 20 bis 80 Gew.-%, insbesondere 30 bis 70 Gew.-%, vorzugsweise 40 bis 60 Gew.-%;
- Komponente C: 0,05 bis 2 Gew.-%, insbesondere 0,2 bis 1 Gew.-%; bezogen auf die Summe der Komponenten A und B;
- Komponente D: 0,1 bis 3 Gew.-%, insbesondere 0,2 bis 1 Gew.-%, bezogen auf die Summe der Komponenten A und B und vorzugsweise
- Komponente E: 1 bis 10 Gew.-%, insbesondere 2 bis 6 Gew.-%, bezogen auf das Feinstbindemittel.

Vorzugsweise wird ein Feinstzement, insbesondere auf Portland-und Hüttenzementbasis als Bindemittel verwendet. Gut geeignet sind auch Gemische aus Feinstzement und Hüttensand-Feinstmehl. Als Feinstfüllstoff werden insbesondere Gesteinsmehle, insbesondere Kalksteinmehl, einer Feinheit von 5 µm < x < 40 µm verwendet. Neben den vorzugsweise eingesetzten Fein, und Feinstkomponenten von 1 bis 40 µm können auch Stoffe von 40 bis ca. 90 µm eingesetzt werden. Fließmittel ist insbesondere ein sulfoniertes Naphthalin-formaldehydkondensat (PNS) und als Beschleuniger wird bevorzugt Natriumsulfat verwendet. Ein bevorzugter Stabilisierer ist Welan-Gummi.

Die Mischungen werden zu einer erfindungsemäßen Injecktionssuspension durch intensives Mischen mit Wasser angemacht, wobei Teilmengen später auch auf der Baustelle als Compound zugegeben werden können. Dabei wird ein Wasser/Feststoff-Wert von über 3,5 eingestellt.

Nach einer Reifungszeit ist die Permeabilität der Schicht, die mit der erfindungsgemäßen Injektionssuspension injiziert wurde, zumindest stark abgesenkt. Die erfindungsgemäßen Rezepturen weisen einen sehr geringen Feststoffgehalt auf, wobei ein sehr hoher Wasser/Feststoff-Wert von über 5 (entspricht einem Wasser/Bindemittel-Wert von vorzugsweise über 10) den Anforderungen nach der Abdichtung z.B. der Sohlschicht aus Sand oder sandhaltigem Boden gerecht wird. Die Suspension eignet sich ebenso für Rißinjektionen im Fels. Die Stabilität der Suspension ergibt sich durch die Zugabe des assoziativen Verdickers (Stabilisierers). Die Feinheit des Feinstbindemittels und des Feinstfüllstoffes richtet sich nach der Art des zu injizierenden Bodens und liegt vorzugsweise im Bereich von über 5 µm und unter 24 µm Korngröße. Als Feinstbindemittel kommen auch latent hyraulische Bindemittel mit Anreger oder natürliche oder künstliche Puzzolane (Traß, calcinierter Ton, calcinierter Kaolin oder calciniertes Gesteinsmehl oder Flugasche oder Silicastaub) mit Reaktionspartner in Frage. Geeignet sind auch Tonerde-Schmelzzement und Zemente üblicher Feinheit. Dabei sind Anreger bzw. Reaktionspartner in der Regel Feinstzement, Feinstcalciumhydroxid, Natrium- oder Kaliumhydroxid oder Natrium- oder Kaliumsulfat. Als Feinstfüllstoffe können - wie bereits erwähnt - auch tonhaltige Gesteinsmehle und Tonmehle eingesetzt werden, soweit sich die Tonkomponente Calciumionen gegenüber weitgehend inert verhält, wie z.B. bei calciumbentonitischen, kaolinitischen und illitischen Tonen. Injektionshilfsmittel sind Dispergiermittel, wie Naphthalinformaldehydkondensatsulfonat oder Natriumpolymethacrylat.

In den erfindungsgemäßen Injektionssuspensionen können sich offenbar die Kristalle der Hydratphasen der Bindemittel, insbesondere der Feinstbindemittel, frei im Raum ausbreiten und eine Art Gerüstanordnung zusammen mit den Körnern des Feinstfüllstoffs entwikkeln, wobei hierzu die Polysaccharide Hilfestellung leisten. Diese Wirkung kann ohne die Beigabe von Sacchariden und im wesentlichen inerten Feinstfüllstoffen nicht bewirkt werden. Bei bekannten Zement- bzw. Feinstzement/Natriumbentonit-Mischungen erfolgt eine Anhäufung des Feststoffmaterials an den Kornoberflächen der Sande oder den Oberflächen der Risse im Fels, so daß ein erheblicher Teil des Raums zwischen den Sandkörnern bzw. in den Rissen für das Eindringen von Wasser frei bleibt. Nach der Erfindung wird dieser Raum nicht durch Inertmaterial ausgefüllt, denn dazu reicht die Menge des inerten Materials nicht aus, sondern es wird eine Matrixstruktur erzeugt, die ein sehr feinporiges Matrixmaterial in den Hohlräumen aufweist. Diese Wirkung der Komponenten war nicht vorhersehbar. Die Erfindung kann - wie bereits ausgeführt - sowohl mit Bindemitteln, insbesondere Zementen, üblicher Feinheit, als auch mit Feinstbindemitteln bzw. Feinstzementen ausgeführt werden, weil es erfindungsgemäß darauf ankommt, in den abzudichtenden Räumen bzw. Porenräumen eine Gerüststruktur aufzubauen, die aus im wesentlichen Calciumsilikathydrat-Kristallen und Füllstoffkörnern besteht.

## Patentansprüche

1. Natriumbentonitfreie Injektionsmittelsuspension hergestellt aus
A: einer Injektionsmittelmischung enthaltend
80 bis 20 Gew.-% mindestens eines mineralischen hydraulischen Bindemittels;
20 bis 80 Gew.-% eines mineralischen inerten Feinstfüllstoffs,
0,1 bis 3 Gew.-% Fließmittel (bezogen auf die Summe aus Bindemittel und Feinstfüllstoff),
0,05 bis 2 Gew.-% eines Stabilisierers aus der Gruppe der mikrobiellen Polysaccharide (bezogen auf die Summe aus Bindemittel und Feinstfüllstoff),
B: Wasser in einer derartigen Menge, daß sich ein Wasser/Feststoff-Wert von über 3,5 einstellt.

2. Injektionsmittelsuspension nach Anspruch 1,
**dadurch gekennzeichnet,** daß die Injektionsmittelmischung
70 bis 30 Gew.-% mindestens eines mineralischen hydraulischen Bindemittels und
30 bis 70 Gew.-% eines mineralischen inerten Feinstfüllstoffs enthält.

3. Injektionsmittelsuspension nach Anspruch 2,
**dadurch gekennzeichnet,** daß die Injektionsmittelmischung
60 bis 40 Gew.-% mindestens eines mineralischen hydraulischen Bindemittels und
40 bis 60 Gew.-% eines mineralischen inerten Feinstfüllstoffs enthält.

4. Injektionsmittelsuspension nach einem oder mehreren der Ansprüche 1 bis 3,
**dadurch gekennzeichnet,** daß die Injektionsmittelmischung 0,2 bis 1 Gew.-% Fließmittel (bezogen auf die Summe aus Bindemittel und Feinstfüllstoff) enthält.

5. Injektionsmittelsuspension nach einem oder mehreren der Ansprüche 1 bis 4,
**dadurch gekennzeichnet,** daß die Injektionsmittelmischung 0,2 bis 1 Gew.-% eines Stabilisierers aus der Gruppe der mikrobielle Polysaccharide, (bezogen auf die Summe aus Bindemittel und Feinstfüllstoff) enthält.

6. Injektionsmittelsuspension nach einem oder mehreren der Ansprüche 1 bis 5,
**dadurch gekennzeichnet,** daß die Injektionsmittelmischung einen Erhärtungsbeschleuniger in Mengen von 1 bis 10 Gew.-%, bezogen auf das Feinstbindemittel, enthält.

7. Injektionsmittelsuspension nach Anspruch 6,
**dadurch gekennzeichnet**, daß die Injektionsmittelmischung einen Erhärtungsbeschleuniger in Mengen von 2 bis 6 Gew.-%, bezogen auf das Feinstbindemittel, enthält.

8. Injektionsmittelsuspension nach Anspruch 1,
**dadurch gekennzeichnet,** daß das Bindemittel ein Feinstbindemittel ist.

9. Injektionsmittelsuspension nach Anspruch 8,
**dadurch gekennzeichnet**, daß das Feinstbindemittel ein Feinstzement ist mit einer Kornfeinheit von 1 bis 40 µm.

10. Injektionsmittelsuspension nach Anspruch 8 und/oder 9,
**dadurch gekennzeichnet,** daß das Feinstbindemittel ein Gemisch aus Feinstzement und Hüttensand-Feinstmehl ist.

11. Injektionsmittelsuspension nach Anspruch 1,
**dadurch gekennzeichnet,** daß das Bindemittel ein Zement und/oder ein Gemisch aus Zement und Hüttensandmehl üblicher Feinheit von 40 bis 90 µm ist.

12. Injektionsmittelsuspension nach einem oder mehreren der Ansprüche 1 bis 11,
**dadurch gekennzeichnet,** daß der Feinstfüllstoff ein Kalksteinmehl ist.

13. Injektionsmittelsuspension nach einem oder mehreren der Ansprüche 1 bis 12,
**dadurch gekennzeichnet,** daß die Kornfeinheit des Feinstfüllstoffs zwischen 1µm < x < 90 µm liegt.

14. Injektionsmittelsuspension nach Anspruch 13,
**dadurch gekennzeichnet,** daß die Kornfeinheit zwischen 5 µm < x < 24 µm liegt.

15. Injektionsmittelsuspension nach einem oder mehreren der Ansprüche 1 bis 14,
**dadurch gekennzeichnet,** daß das Polysaccharid ein Biopolymer auf der Basis von Xanthan-Gummi ist.

16. Injektionsmittelsuspension nach einem oder mehreren der Ansprüche 1 bis 15,
**dadurch gekennzeichnet,** daß das Polysaccharid ein Biopolymer auf der Basis von Welan-Gummi, vorzugsweise Welan-Gummi selbst ist.

17. Injektionsmittelsuspension nach einem oder mehreren der Ansprüche 1 bis 16,
**dadurch gekennzeichnet,** daß als zusätzlicher natürlicher Verdicker Guar- und/oder Johannisbrotkernmehl enthalten sind.

18. Injektionsmittelsuspension nach einem oder mehreren der Ansprüche 1 bis 17,
**dadurch gekennzeichnet,** daß sie mindestens einen Erhärtungsbeschleuniger und/oder ein Injektionshilfsmittel und/oder ein Wasserretentionsmittel enthält.

19. Injektionsmittelsuspension nach einem oder mehreren der Ansprüche 1 bis 18,
**gekennzeichnet durch** ein Wasser/Bindemittel-Wert von über 7.

20. Injektionsmittelsuspension nach einem oder mehreren der Ansprüche 1 bis 19,
**gekennzeichnet durch** einen Wasser/Feststoff-Wert von über 5.

21. Injektionsmittelsuspension nach einem oder mehreren der Ansprüche 1 bis 20,
**gekennzeichnet durch** einen Wasser/Bindemittel-Wert von über 10.

## Claims

1. Sodium-bentonite-free injection-composition suspension prepared from
A: an injection-composition mixture comprising
from 80 to 20% by weight of at least one mineral hydraulic binder;
from 20 to 80% by weight of a very finely divided inert mineral filler,
from 0.1 to 3% by weight of flow agents (based on the total of binder and very finely divided filler),
from 0.05 to 2% by weight of a stabilizer selected from the class consisting of the microbial polysaccharides (based on the total of binder and very finely divided filler),
B: an amount of water such that the water/solid value is above 3.5.

2. Injection-composition suspension according to Claim 1,
characterized in that the injection-composition mixture comprises
from 70 to 30% by weight of at least one mineral hydraulic binder and
from 30 to 70% by weight ofa very finely divided inert mineral filler.

3. Injection-composition suspension according to Claim 2, characterized in that the injection-composition mixture comprises
from 60 to 40% by weight of at least one mineral hydraulic binder and
from 40 to 60% by weight of a very finely divided inert mineral filler.

4. Injection-composition suspension according to one or more of Claims 1 to 3,
characterized in that the injection-composition mixture comprises from 0.2 to 1% by weight of flow agents (based on the total of binder and very finely divided filler).

5. Injection-composition suspension according to one or more of Claims 1 to 4,
characterized in that the injection-composition mixture comprises from 0.2 to 1% by weight of a stabilizer selected from the class consisting of the microbial polysaccharides (based on the total of binder and of very finely divided filler).

6. Injection-composition suspension according to one or more of Claims 1 to 5,
characterized in that the injection-composition mixture comprises a hardening accelerator in amounts of from 1 to 10% by weight, based on the very finely divided binder.

7. Injection-composition suspension according to Claim 6,
characterized in that the injection-composition mixture comprises a hardening accelerator in amounts of from 2 to 6% by weight, based on the very finely divided binder.

8. Injection-composition suspension according to Claim 1,
characterized in that the binder is a very finely divided binder.

9. Injection-composition suspension according to Claim 8,
characterized in that the very finely divided binder is a very finely divided cement with a fine grain size of from 1 to 40 µm.

10. Injection-composition suspension according to Claim 8 and/or 9,
characterized in that the very finely divided binder is a mixture of very finely divided cement and very finely divided ground cinder sand.

11. Injection-composition suspension according to Claim 1,
characterized in that the binder is a cement and/or a mixture of cement and ground cinder sand of a usual fineness of from 40 to 90 µm.

12. Injection-composition suspension according to one or more of Claims 1 to 11,
characterized in that the very finely divided filler is a ground limestone.

13. Injection-composition suspension according to one or more of Claims 1 to 12,
characterized in that the fine grain size of the very finely divided filler is from 1 µm < x < 90 µm.

14. Injection-composition suspension according to Claim 13,
characterized in that the fine grain size is from 5 µm < x < 24 µm.

15. Injection-composition suspension according to one or more of Claims 1 to 14,
characterized in that the polysaccharide is a biopolymer based on xanthan gum.

16. Injection-composition suspension according to one or more of Claims 1 to 15,
characterized in that the polysaccharide is a biopolymer based on Welan Gum, preferably Welan Gum itself.

17. Injection-composition suspension according to one or more of Claims 1 to 16,
characterized in that ground guar and/or carob bean grains are present as additional natural thickener.

18. Injection-composition suspension according to one or more of Claims 1 to 17,
characterized in that it comprises at least one hardening accelerator and/or an injection auxiliary and/or a water-retention agent.

19. Injection-composition suspension according to one or more of Claims 1 to 18,
characterized by a water/binder value above 7.

20. Injection-composition suspension according to one or more of Claims 1 to 19,
characterized by a water/solid value above 5.

21. Injection-composition suspension according to one or more of Claims 1 to 20,
characterized by a water/binder value above 10.

## Revendications

1. Suspension d'une composition injectable sans bentonite de sodium fabriquée à partir
A:d'un mélange injectable contenant
80% à 20% en poids au moins d'un agent liant minéral hydraulique;
20% à 80% en poids d'une matière de charge minérale inerte ultrafine,
0,1% à 3% en poids d'un agent de fluidification (par rapport total de l'agent liant et de la matière de charge ultrafine),
0,05% à 2% en poids d'un agent stabilisant choisi parmi le groupe des polysaccharides microbiens (par rapport au total de l'agent liant et de la matière de charge ultrafine),
B:d'eau dans une quantité telle, qu'il se forme un rapport eau/particules solides supérieur à 3,5.

2. Suspension d'une composition injectable selon la revendication 1, caractérisée en ce que le mélange injectable contient au moins 70% à 30% en poids d'un agent liant minéral hydraulique et de 30% à 70% en poids d'une matière minérale inerte ultrafine de charge.

3. Suspension d'une composition injectable selon la revendication 2, caractérisée en ce que le mélange injectable contient au moins 60% à 40% en poids d'un agent liant minéral hydraulique et 40% à 60% en poids d'une matière minérale inerte ultrafine de charge.

4. Suspension d'une composition injectable selon l'une quelconque des revendications 1 à 3, caractérisée en ce que le mélange injectable contient 0,2% à 1% en poids d'un agent de fluidification (par rapport au total de l'agent liant et d'une matière de charge ultrafine).

5. Suspension d'une composition injectable selon l'une quelconque des revendications 1 à 4, caractérisée en ce que le mélange injectable contient 0,2% à 1% en poids d'un agent stabilisant choisi parmi le groupe des polysaccharides microbiens, (par rapport au total de l'agent liant et de la matière de charge ultrafine).

6. Suspension d'une composition injectable selon l'une quelconque des revendications 1 à 5, caractérisée en ce que le mélange injectable contient un accélérateur de durcissement en une quantité de 1% à 10% en poids, par rapport à l'agent liant ultrafin.

7. Suspension d'une composition injectable selon la revendication 6, caractérisée en ce que le mélange injectable contient un accélérateur de durcissement en une quantité de 2% à 6% en poids, par rapport à l'agent liant ultrafin.

8. Suspension d'une composition injectable selon la revendication 1, caractérisée en ce que l'agent liant est un agent liant ultrafin.

9. Suspension d'une composition injectable selon la revendication 8, caractérisée en ce que l'agent liant ultrafin consiste en un ciment ultrafin avec une granulométrie d'environ 1 à 40 µm.

10. Suspension d'une composition injectable selon la revendication 8 et/ou 9, caractérisée en ce que le liant ultrafin consiste en un mélange de ciment ultrafin et d'une poudre ultrafine de sable métallurgique.

11. Suspension injectable selon la revendication 1, caractérisée en ce que l'agent liant consiste en un ciment et/ou un mélange de ciment et de poudre ultrafine de sable métallurgique à granulométrie usuelle comprise entre 40 et 90 µm.

12. Suspension d'une composition injectable selon l'une quelconque des revendications 1 à 11, caractérisée en ce que la matière de charge ultrafine consiste en une poudre de roche calcaire.

13. Suspension d'une composition injectable selon l'une quelconque des revendications 1 à 12, caractérisée en ce que la granulométrie de la matière de charge ultrafine possède des valeurs comprises entre 1 µm<x< 90µm.

14. Suspension d'une composition injectable selon la revendication 13, caractérisée en ce que la granulométrie possède des valeurs comprises entre 5 µm< x< 24µm.

15. Suspension d'une composition injectable selon l'une quelconque des revendications 1 à 14, caractérisée en ce que le polysaccharide consiste en un biopolymère à base de xanthane-caoutchouc.

16. Suspension d'une composition injectable selon l'une quelconque des revendications 1 à 15, caractérisée en ce que le polysaccharide consiste en un biopolymère à base de welan-caoutchouc, de préférence du welan-caoutchouc seul.

17. Suspension d'une composition injectable selon l'une quelconque des revendications 1 à 16, caractérisée en ce qu'elle contient comme épaississant naturel additionel une poudre ultrafine de guar et/ou une farine de caroube.

18. Suspension d'une composition injectable selon l'une quelconque des revendications 1 à 17, caractérisée en ce qu'elle contient au moins un accélérateur de durcissement et/ou un adjuvant injectable et/ou un agent de rétention d'eau.

19. Suspension d'une composition injectable selon l'une quelconque des revendications 1 à 18, caractérisée par un rapport eau/agent liant supérieur à 7.

20. Suspension d'une composition injectable selon l'une quelconque des revendications 1 à 19, caractérisée par un rapport eau/particules solides supérieur à 5.

21. Suspension d'une composition injectable selon l'une quelconque des revendications 1 à 20, caractérisée par un rapport eau/agent liant supérieur à 10.
